# EUROPÄISCHE PATENTSCHRIFT

(11) **EP 0 764 102 B1**
(45) Veröffentlichungstag und Bekanntmachung des Hinweises auf die Patenterteilung: **20.01.1999**
(21) Anmeldenummer: 96908138.9
(22) Anmeldetag: 26.03.1996
(51) Int. Cl.: B61D 17/04, B61D 17/08, B62D 27/02

(54) **SCHIENENFAHRZEUG**
RAIL VEHICLE
VEHICULE SUR RAILS

(30) Priorität: 05.04.1995 DE 19512629
(43) Veröffentlichungstag der Anmeldung: 26.03.1997
(73) Patentinhaber: ABB Daimler-Benz Transportation (Technology) GmbH, 13627 Berlin (DE)
(72) Erfinder: BIEKER, Guido, D-57399 Kirchhunden (DE)
(74) Vertreter: Luderschmidt, Schüler & Partner GbR
(86) Internationale Anmeldenummer: EP9601314
(87) Internationale Veröffentlichungsnummer: WO9631382

(56) Entgegenhaltungen:
- EP-A- 0 031 306
- DE-U- 9 415 771
- FR-A- 2 046 581

## Beschreibung

Die Erfindung betrifft ein Schienenfahrzeug mit einem Wagenkasten, mit einem Boden und einem Dach sowie mit Seitenwänden, welche Fenster und Einstiegsbereicheaufweisen, siehe z.B. DE,U, 94 15771.5 A

Bekannte Schienenfahrzeuge besitzen einen Tragrahmen, der einerseits mit den Radsätzen direkt oder über den Drehgestellrahmen mit den Radsätzen verbunden ist und andererseits den Wagenkasten aufnimmt. Insbesondere bei geschlossenen Schienenfahrzeugen, wie zum Beispiel für den Personentransport, ist es bekannt, den Wagenaufbau im Hinblick auf mechanische Beanspruchungen in die konstruktive Auslegung einzubeziehen, wobei die dem Wagenkasten zugeordneten Seitenwände und das Dach integrale Bestandteile der tragenden Struktur sind. Zu diesem Zweck sind die Seitenwände beispielsweise aus Stahlblech gefertigt, wobei gegebenenfalls Verstärkungsstreben an kritischen Stellen hinzukommen.

Auf diese Weise ausgebildete Schienenfahrzeuge sind relativ biege- und verwindungssteif, was dazu führt, daß die im Betrieb auftretenden, den Fahrkomfort beeinträchtigenden Biegeeigenschwingungen zu höheren Frequenzen verschoben werden. Hieraus resultiert, daß diese Schwingungen aufgrund der bei hohen Frequenzen geringeren Schwingungsenergie als weniger störend empfunden werden. Ein ungewünschter Begleiteffekt dieser "steifen" Auslegung der Fahrzeugröhre ist einerseits das häufig beträchtliche Eigengewicht, was entsprechende Antriebsleistung erfordert, und andererseits die Tatsache, daß, um die erforderliche Steifigkeit nicht zu gefährden, nicht jede aus Betriebserfordernissen gewünschte Optimierung, zum Beispiel hinsichtlich der Anordnung der Einstiegsbereiche, umsetzbar ist, ohne den Fahrkomfort zu beeinträchtigen.

Ausgehend von diesem Stand der Technik ist es Aufgabe der Erfindung ein Schienenfahrzeug der eingangs genannten Art in Leichtbauweise zu schaffen, das darüberhinaus den Anforderungen an Fahrkomfort und Variabilität der Anordnung der Einstiegsbereiche gleichermaßen gerecht wird.

Diese Aufgabe wird erfindungsgemäß durch die kennzeichnenden Merkmale des Anspruchs 1 gelöst. Dementsprechend ist vorgesehen, daß der Wagenkasten selbsttragend ausgebildet ist, daß die Seitenwände jeweils von einem mit dem Boden biegesteif verbundenen Fachwerk mit Seitenwandelementen gebildet sind, daß die Seitenwandelemente steif ausgebildet sind und am Fachwerk mittels Klebeverbindung nichttragend befestigt sind und daß die Klebeverbindung zur Schwingungsdämpfung von beim Betrieb des Schienenfahrzeugs auftretenden Schwingungen dient.

Entsprechend einer vorteilhaften Ausgestaltung der Erfindung ist vorgesehen, daß die Klebeverbindung die beim Betrieb des Schienenfahrzeugs auftretenden Schwingungen dadurch dämpft, daß die Klebeverbindung durch Relativbewegung der Klebepartner in der jeweiligen Klebestelle Dämpfungsarbeit verrichtet.

Gemäß einer bevorzugten Ausführungsform der Erfindung ist der Seitenwandaufbau dadurch gekennzeichnet, daß die Klebeverbindung als Dickschichtklebung mit einer Dicke der Klebeschicht von wenigstens 3 mm ausgebildet ist.

Entsprechend einer vorteilhaften Weiterbildung ist für die erfindungsgemäße Dickklebeschicht eine Schichtdicke von 3 bis 12 mm vorgesehen, wobei eine sich als besonders vorteilhaft erweisende Dickschichtklebung eine Klebschichtdicke von 5 bis 8 mm, vorzugsweise 6 mm, aufweist.

Die Begrenzung der Klebschichtdicke nach unten resultiert sowohl aus der Erkenntnis, daß Relativbewegungen zwischen dem Fachwerk einerseits und dem beispielsweise in Sandwich-Bauweise gestalteten Seitenwandelement andererseits aufgenommen werden müssen und nicht zu Ablösungen des Klebers beziehungsweise zu einer Schädigung der Dickklebeschicht führen dürfen, als auch aus der erfindungsgemäß vorgesehenen Eignung zur Aufnahme von Dämpfungsarbeit, die umso besser erfolgt, je größer im Rahmen der oben angegebenen Klebschichtdickens das vorhandene Volumen der Klebeschicht ist

Demgegenüber ist die Begrenzung der Klebschichtdicke nach oben, abgesehen von möglichen Abmessungserfordernissen, lediglich durch Eigenschaften des verwendeten Klebers hinsichtlich seiner Erfüllung der Anforderungen an die Haft- und Scherfestigkeit und Kohäsion der Klebeschicht bestimmt.

Zur Herstellung der erfindungsgemäß vorgesehenen Dickklebeschicht kann bevorzugterweise ein Dickschichtkleber auf PU-Basis oder auf Polyoxypropylen-Basis vorgesehen sein, der eine Scherfestigkeit von ca. 1,5 N/mm² aufweist.

Zur Verbesserung der Einsatzmöglichkeiten der erfindungsgemäßen Verbindung der Seitenwandelemente mittels der Dickklebeschicht ist ferner vorgesehen, daß die Klebeverbindung im Reparaturfall mechanisch, z.B. mittels Schneidwerkzeug, oder thermisch, z.B. mittels Hitzdraht trennbar ist. Auf diese Weise kann jederzeit ein Seitenwandteil gegen ein anderes ausgewechselt werden, ohne daß eine Beschädigung des Seitenwandteils oder des Fachwerks durch die Demontage zu befürchten ist.

Durch die vorliegende Erfindung wird die zugrundeliegende Aufgabe bedarfsgerecht gelöst, indem der erwünschte Fahrkomfort nicht durch eine hohe Biegeeigenfrequenz bei entsprechender Steifigkeit und entsprechendem Gewicht des Fahrzeugs erreicht wird, sondern indem einerseits die Eigenschwingungen zu niedrigen Frequenzen verschoben sind, gleichzeitig aber mit Hilfe der Dickschichtklebung und der hiermit erzielten Dämpfungsfähigkeit derart gedämpft werden, daß ein hohes Maß an Fahrkomfort über den gesamten angeregten Frequenzbereich gewährleistet ist.

Bei dieser erfindungsgemäß vorgesehenen Auslegung der Fahrzeugkonstruktion wird eine initiierte Eigenschwingung, gleich welcher Frequenz, infolge der mittels der Dickschichtklebung möglichen Dämpfung sehr rasch abgebaut, ohne daß schwingungsbedingte Beeinträchtigungen für die Fahrgäste resultieren.

Zur konstruktiven Umsetzung dieses Erfindungsgedankens ist also ein selbsttragender Wagenkasten, vorzugsweise in Fachwerkbauweise, vorgesehen, bei welchem die Seitenwandelemente von der seitherigen Aufgabe, integrale Bestandteile der tragenden Struktur zu sein, entbunden sind.

Zur Gewährleistung der erforderlichen Fahrqualität, das heißt des Fahrkomforts, ist lediglich sicher zu stellen, daß unausbleibliche Schwingungen des Wagenkastens gedämpft werden. Dies wird entsprechend der Erfindung dadurch erreicht, daß die Relativbewegungen zwischen Seitenwand und tragendem Fahrzeugkasten vorzugsweise über die erwähnte Dichschichtklebung gedämpft wird.

Stattdessen ist aber auch möglich, die Dämpfungsarbeit dadurch sicherzustellen, daß die Seitenwände jeweils von einem mit dem Boden biegesteif verbundenen Fachwerk mit Fachwerkstreben gebildet sind, an welchem steif ausgebildete Seitenwandelemente reibschlüssig anliegen und örtlich befestigt sind, und daß zur Dämpfung von beim Betrieb des Schienenfahrzeugs auftretenden Schwingungen die planmäßige Nutzung von Reibarbeit dient, welche durch Relativbewegungen der reibschlüssig aneinander liegenden jeweiligen Seitenwandelemente und Fachwerkstreben verursacht ist.

So kann die dämpfende Kopplung der Seitenwandelemente mit dem Fachwerk beziehungsweise mit den Fachwerkstreben durch andere Dämpfungsmittel, zum Beispiel unter Verwendung von entsprechenden lösbaren Gummi-Metall-Verbindungselementen oder von Koppelungsprofilen aus stark dämpfendem Material zur form- und/oder kraftschlüssigen Verbindung zu erreicht werden

Unabhängig davon, ob die Seitenwandelemnete mittels einer Klebeschicht am Fachwerk des Wagenkastens anschließen oder mittels reibschlüssiger Verbindungselemente, ist stets vorgesehen, daß die Seitenwandelemente im fertiglackierten Endzustand zur Montage gelangen und mit dem Fachwerk verbunden werden, wobei die Seitenwandelemente jeweils mit einer Isolierung versehen sind.

Erst durch die erfindungsgemäß vorgesehene Nutzung der Dämpfungsarbeit in der Verbindung zwischen den Seitenwandelementen und dem Fachwerk ist es in weiterer Verbesserung möglich, daß die konstruktive Auslegung des Schienenfahrzeuges nach Festigkeitsgesichtspunkten erfolgen kann und nicht nach Steifigkeitsaspekten.

Hierdurch wiederum ist die Möglichkeit gegeben, einfache und damit leichte Konstruktionen zu schaffen, die neben gutem Fahrkomfort auch eine optimale Anordnung der Einstiegsbereiche aufweisen, die bedarfsweise leicht variiert werden kann. ohne das Grundkonzept zu verlassen.

Die Dämpfung der Biegeeigenschwingungen erfolgt, wie vorstehend beschrieben durch die Relativbewegung der tragenden Wagenstruktur gegenüber den steif ausgebildeten mittels einer definiert ausgeführten Klebeschicht oder über reibschlüssig wirksame Verbindung am Wagenkasten anschließenden Seitenwandelementen. Aufgrund des Umstandes, daß die Verbindung der Seitenwandelemente mit dem Wagenkasten keine Kräfte aufzunehmen hat, kann diese Verbindung weich ausgebildet sein, so daß Relativbewegungen möglich sind, die entsprechend der Erfindung zur Dämpfung herangezogen werden, indem sie durch Dämpfungsarbeit in der Verbindungsschicht zwischen den Seitenwandelementen und dem Wagenkasten zum Abbau der Schwingungsenergie dienen.

Als Dämpfungsarbeit ist hierbei der Flächeninhalt der Hysterese der Verbindung infolge der Relativbewegung anzusehen.

Diese und weitere vorteilhafte Ausgestaltungen und Verbesserungen, die in der nachfolgenden Beschreibung eines Ausführungsbeispiels angegeben sind, sind Gegenstand der Unteransprüche. Anhand eines in der schematischen Zeichnung dargestellten Ausführungsbeispiels sollen die Erfindung, vorteilhaftze Ausgestaltungen und Verbesserungen der Erfindung sowie besondere Vorteile der Erfindung näher erläutert und beschrieben werden.

Es zeigen
- Fig. 1: die Ansicht der Fahrzeugstruktur von der Seite,
- Fig. 2: den Seitenwandaufbau,
- Fig. 3: ein Schwingungsdiagramm für eine steife Wagenstruktur entsprechend dem Stand der Technik und
- Fig. 4: den Schwingungsverlauf beim erfindungsgemäß ausgebildeten Fahrzeug.

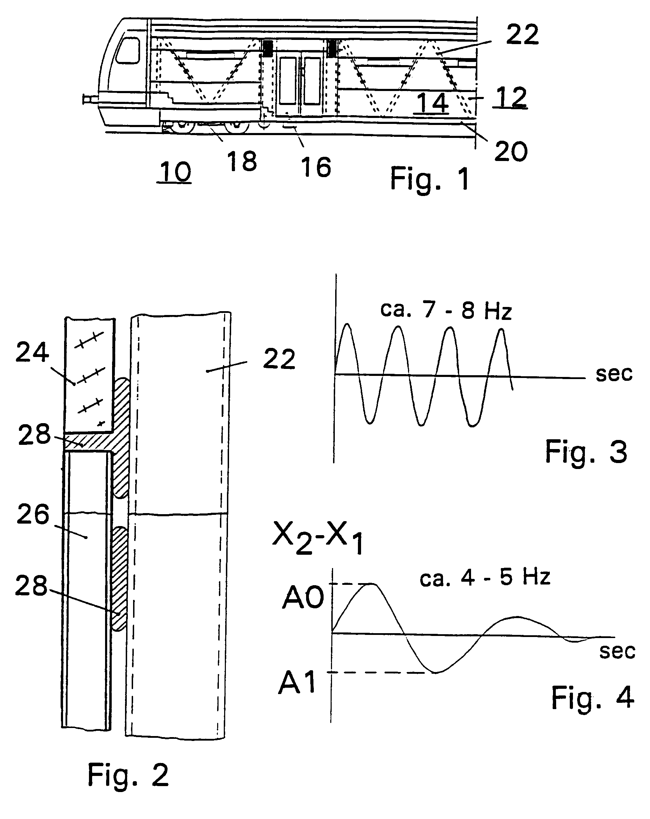

In Fig. 1 ist ein stirnseitiger Abschnitt eines entsprechend der Erfindung gestalteten Fahrzeugs 10 mit einem selbsttragenden Wagenkasten 12, mit einer Seitenwand 14 mit einem Einstiegsbereich 16 sowie mit einem Radsatz 18 dargestellt. Der Wagenkasten 12 weist einen Boden 20 und ein hiermit biegesteif verbundenes Fachwerk 22 auf, das als Tragstruktur für die aus hier nicht, sondern in Fig. 2 näher gezeigten Seitenwandelementen 24, 26 gebildete Seitenwand 14 dient.

Die der Erfindung zugrundeliegende Fachwerkstruktur 22 bietet die Vorteile der Leichtbauweise verbunden mit einer optimalen Gewichtsausnutzung, wobei im Hinblick auf die Stabilität dieser Leichtbaukonstruktion keinerlei Einschränkungen bestehen.

Die Seitenwandelemente 24, 26 werden entsprechend der Erfindung unter Verwendung eines geeigneten Einkomponenten- oder Mehrkomponenten-Klebers mittels einer Klebung in definierter Dicke der Klebeschicht 28 am Fachwerk befestigt. Unter geeignetem Kleber ist hierbei ein solcher Kleber zu verstehen, dessen Scherverhalten die auftretenden Relativbewegungen zwischen dem Fachwerk 22 und dem jeweiligen Seitenwandelement 24, 26 ohne Schädigung oder gar Ablösung vom Grundmaterial erträgt und so im Fachwerk 22 auftretende Schwingungen durch entsprechende Dämpfungsarbeit in der Klebeschicht absorbiert. Günstig erweisen sich hierbei Kleber, die eine Scherfestigkeit von ca. 1,5 N/mm² aufweisen.

Die Klebung 28 muß demgemäß eine ausreichende Schichtdicke aufweisen, um die erfindungsgemäß zur Absorption der Schwingungen eingeplante Dämpfungsarbeit zu leisten. Eine zu dünne Klebeschicht würde nämlich zu keiner Dämpfung sondern zu Steifigkeit der Konstruktion führen, was andererseits - wie eingangs erläutert - andere Maßnahmen zur Beherrschung der störenden Schwingungen erfordern würde und darüberhinaus nur mit entsprechend festigkeitsmäßig als tragend ausgelegten Seitenwandelementen realisierbar wäre.

In Fig. 2 ist ein teilweiser Längsschnitt durch eine Seitenwand 14 mit durchscheinenden und nicht durchscheinenden Seitenwandelementen 24, 26 gezeigt, in welchem Längsschnitt erkennbar ist, wie die aus transluzentem Material, zum Beispiel Glas,bestehenden Seitenwandfenster 24 und die aus nicht durchscheinendem Material gebildeten Seitenwandelemente 26 mittels einer Klebeschicht 28 an der Fachwerkstruktur 22 angebracht sind.

In Fig. 3 ist beispielhaft, zur Verdeutlichung der bisherigen Problematik der Schwingungsverlauf einer Durchbiegungsschwingung in einer herkömmliche, nicht gedämpften Fahrzeugröhre hoher Steifigkeit nach dem Stand der Technik gezeigt. Diese Art von Schwingung verläuft ungedämpft bei einer Frequenz von ca. 7 bis 8 Hz. Um die Laufgüte eines derartigen Fahrzeuges zu verbessern, müßte die Biegeeigenfrequenz des Wagenkastens zu möglichst hohen Frequenzen verschoben werden, um Resonanzverhalten sicher auszuschließen, was aber nur durch entsprechende Versteifung des Wagenkastens verbunden mit einer deutlichen Erhöhung des Fahrzeuggewichts erreichbar ist.

In Fig. 4 ist der Schwingungsverlauf der Durchbiegeschwingung des Wagenkastens eines erfindungsgemäßen Fahrzeugs gezeigt.
Die Biegeeigenfrequenzen liegen hierbei zwar niedriger als bei den herkömmlichen Strukturen, sie werden jedoch, sobald eine Schwingung angeregt ist, durch die erfindungsgemäß vorgesehene Relativbewegung zwischen dem Fachwerk 22 und den Seitenwandelementen 24, 26 über die Klebeschicht 28 abgebaut.

Die Dämpfungsarbeit, die der Kleber beziehungsweise die Klebeschicht 28 leistet, entspricht deren Hysterese, die sich beim Durchlaufen einer Schwingung ergibt.

## Patentansprüche

1. Schienenfahrzeug (10) mit einem selbsttragenden Wagenkasten (12) mit einem Boden (20) und einem Dach sowie mit Seitenwänden (14), welche Fenster und Einstiegsbereiche (16) aufweisen, und wobei die Seitenwände (14) jeweils von einem mit dem Boden (20) biegesteif verbundenen Fachwerk (22) mit Seitenwandelementen (24, 26) gebildet sind, dadurch gekennzeichnet, daß die Seitenwandelemente (24, 26) steif ausgebildet sind und am Fachwerk (22) mittels Klebeverbindung (28) nichttragend befestigt sind und daß die Klebeverbindung (28) zur Schwingungsdämpfung von beim Betrieb des Schienenfahrzeugs (10) auftretenden Schwingungen dient.

2. Schienenfahrzeug nach Anspruch 1, dadurch gekennzeichnet, daß die Klebeverbindung (28) beim Betrieb des Schienenfahrzeugs (10) auftretende Schwingungen dämpft, indem sie durch Relativbewegung der Klebepartner in der jeweiligen Klebeverbindung (28) Dämpfungsarbeit verrichtet.

3. Schienenfahrzeug nach Anspruch 1 oder 2, dadurch gekennzeichnet, daß die Klebeverbindung (28) als Dickschichtklebung mit einer Dicke der Klebeschicht von wenigstens 3 mm ausgebildet ist.

4. Schienenfahrzeug nach einem der vorherigen Ansprüche, dadurch gekennzeichnet, daß für die Dickklebeschicht eine Schichtdicke von 3 bis 12 mm vorgesehen ist.

5. Schienenfahrzeug nach einem der vorherigen Ansprüche, dadurch gekennzeichnet, daß die Dickschichtklebung eine Klebschichtdicke von 5 bis 8 mm, vorzugsweise von 6 mm, aufweist.

6. Schienenfahrzeug nach einem der vorherigen Ansprüche, dadurch gekennzeichnet, daß zur Herstellung der Klebeverbindung ein Dickschichtkleber auf PU-Basis vorgesehen ist, der eine Scherfestigkeit von wenigstens 1,5 N/mm² aufweist.

7. Schienenfahrzeug nach einem der vorherigen Ansprüche, dadurch gekennzeichnet, daß die Klebeverbindung im Reparaturfall mechanisch, z.B. mittels Schneidwerkzeug, oder thermisch, z.B. mittels Hitzdraht trennbar ist.

8. Schienenfahrzeug (10) mit einem selbsttragenden Wagenkasten (12) mit einem Boden (20) und einem Dach sowie mit Seitenwänden (14), welche Fenster und Einstiegsbereiche (16) aufweisen, dadurch gekennzeichnet, daß die Seitenwände (14) jeweils als mit dem Boden (20) biegesteif verbundenes Fachwerk (22) mit Fachwerkstreben ausgebildet sind, an welchem steif ausgebildete Seitenwandelemente (24, 26) reibschlüssig anliegen und örtlich befestigt sind, und daß zur Dämpfung von beim Betrieb des Schienenfahrzeugs (10) auftretenden Schwingungen die planmäßige Nutzung von Reibarbeit dient, welche durch Relativbewegungen der reibschlüssig aneinander liegenden jeweiligen Seitenwandelemente (24, 26) und des Fachwerks (22) verursacht ist.

9. Schienenfahrzeug nach einem der vorherigen Ansprüche, dadurch gekennzeichnet, daß die Seitenwandelemente (24, 26) im fertiglackierten Endzustand mit dem Fachwerk (22) verbunden sind.

10. Schienenfahrzeug nach einem der vorherigen Ansprüche, dadurch gekennzeichnet, daß die konstruktive Auslegung des Schienenfahrzeuges nach Festigkeitsgesichtspunkten und nicht nach Steifigkeitsgesichtspunkten vorgesehen ist.

11. Schienenfahrzeug nach einem der vorherigen Ansprüche, dadurch gekennzeichnet, daß die Seitenwandelemente (26) mit einer Isolierung versehen sind.

## Claims

1. A rail mounted vehicle (10) with a self-supporting coach body (12) with a floor (20) and a roof as well as with side walls (14) which comprise windows and access areas (16) and whereby the side walls (14) are respectively formed by a lattice structure (22) with side wall elements (24, 26) and flexurally rigidly connected to the floor (20), characterised in that the side wall elements (24, 26) are of rigid construction and are non-supportingly fixed to the lattice structure (22) by glued connections (28) and in that the glued connection (28) serves to dampen vibration from vibrations which occur when the rail mounted vehicle (10) is in operation.

2. A rail mounted vehicle according to claim 1, characterised in that the adhesive connection (28) damps vibrations which occur when the rail mounted vehicle (10) is in operation in that it performs damping work by relative movement of the partners in the respective adhesive connection (28).

3. A rail mounted vehicle according to claim 1 or 2, characterised in that the adhesive connection (28) is constructed as a thick-layer adhesion, the thickness of the adhesive layer being at least 3 mm.

4. A rail mounted vehicle according to one of the preceding claims, characterised in that a layer thickness of 3 to 12 mm is provided for the thick adhesive layer.

5. A rail mounted vehicle according to one of the preceding claims, characterised in that the thick adhesive layer has an adhesive layer thickness of 5 to 8 mm and preferably of 6 mm.

6. A rail mounted vehicle according to one of the preceding claims, characterised in that in order to produce the adhesive connection, a PU-based thick layer adhesive is provided which has a shear strength of at least 1.5 N/mm².

7. A rail mounted vehicle according to one of the preceding claims, characterised in that the adhesive connection can in the event of a repair be parted mechanically, e.g. by means of a cutting tool or by heat, e.g. by means of a hot wire.

8. A rail mounted vehicle (10) with a self-supporting coach body (12) with a floor (20) and a roof as well as with side walls (14) which comprise windows and access areas, characterised in that the side walls (14) are respectively constructed as a lattice structure (22) with lattice work struts and flexurally rigidly connected to the floor (20) and on which rigidly constructed side wall elements (24, 26) bear in frictionally engaged fashion and are locally secured, and in that for damping vibrations which occur when the rail mounted vehicle (10) is in operation, the systematic utilisation of friction work is used, said friction work being caused by relative movements of the respective frictionally engaged side wall elements (24, 26) and of the lattice structure (22).

9. A rail mounted vehicle according to one of the preceding claims, characterised in that the side wall elements (24, 26) are connected to the lattice wall structure (22) when they are in their final and finished-painted state.

10. A rail mounted vehicle according to one of the preceding claims, characterised in that the structural design of the rail mounted vehicle is based on points of view of strength and not points of view of rigidity.

11. A rail mounted vehicle according to one of the preceding claims, characterised in that the side wall elements (26) are provided with an insulation.

## Revendications

1. Véhicule sur rails (10) avec une caisse de wagon (12) autoportante avec un fond (20) et un toit ainsi qu'avec des éléments de paroi latérale (14), qui présentent des fenêtres et des zones d'accès (16), et des parois latérales (14) étant formées chacune d'un treillis (22) relié au fond (20) de façon résistante à la flexion avec des éléments de paroi latérale (24,26), caractérisé en ce que les éléments de paroi latérale (24,26) sont conçus de façon rigide et sont fixés sur le treillis (22) au moyen d'un assemblage collé (28) de façon non portante et en ce que l'assemblage collé (28) sert à l'amortissement des vibrations qui apparaissent lors du fonctionnement du véhicule sur rails (10).

2. Véhicule sur rails selon la revendication 1, caractérisé en ce que l'assemblage collé (28)amortit les vibrations qui apparaissent lors du fonctionnement du véhicule sur rails (10) en effectuant un travail d'amortissement par le déplacement relatif des partenaires de collage dans l'assemblage collé (28) respectif.

3. Véhicule sur rails selon la revendication 1 ou 2, caractérisé en ce que l'assemblage collé (28) est conçu comme un collage de couche épaisse avec une épaisseur de la couche de collage d'au moins 3 mm.

4. Véhicule sur rails selon l'une quelconque des revendications précédentes, caractérisé en ce qu'il est prévu une épaisseur de couche de 3 à 12 mm pour la couche collante épaisse.

5. Véhicule sur rails selon l'une quelconque des revendications précédentes, caractérisé en ce que le collage de couche épaisse présente une épaisseur de couche collante de 5 à 8 mm, de préférence 6 mm.

6. Véhicule sur rails selon l'une quelconque des revendications précédentes, caractérisé en ce qu'il est prévu pour la préparation de l'assemblage collé une colle pour couche épaisse à base de PU, qui présente une résistance au cisaillement d'au moins 1,5 N/mm².

7. Véhicule sur rails selon l'une quelconque des revendications précédentes, caractérisé en ce que l'assemblage collé peut être séparé en cas de réparation de façon mécanique, par exemple au moyen d'un outil de coupe, ou de façon thermique, par exemple au moyen d'un filament chauffant.

8. Véhicule sur rails (10) avec une caisse de wagon (12) autoporteuse avec un fond (20) et un toit ainsi qu'avec des parois latérales (14), qui présentent des fenêtres et des zones d'accès (16), caractérisé en ce que les parois latérales (14) sont conçues chacune comme un treillis (22) relié au fond (20) de façon résistante à la flexion avec des entretoises de treillis, treillis sur lequel des éléments de paroi latérale (24,26) conçus de façon rigide viennent s'appuyer par frottement et sont fixés localement, et en ce que, pour amortir les vibrations qui apparaissent lors du fonctionnement du véhicule sur rails (10), on utilise comme prévu le travail de frottement, qui est provoqué par les déplacements relatifs des éléments respectifs de paroi latérale (24,26), qui sont en contact par frottement, et du treillis (22).

9. Véhicule sur rails selon l'une quelconque des revendications précédentes, caractérisé en ce que les éléments de paroi latérale (24,26) sont reliés au treillis (22) dans l'état final entièrement laqué.

10. Véhicule sur rails selon l'une quelconque des revendications précédentes, caractérisé en ce que la conception de construction du véhicule sur rails est prévue selon des aspects de solidité et non pas selon des aspects de rigidité.

11. Véhicule sur rails selon l'une quelconque des revendications précédentes, caractérisé en ce que les éléments de paroi latérale (26) sont pourvus d'une isolation.
